# EUROPEAN PATENT SPECIFICATION

(11) **EP 1 551 050 B1**
(45) Date of publication and mention of the grant of the patent: **02.03.2011**
(21) Application number: 02764896.3
(22) Date of filing: 24.09.2002
(51) Int. Cl.: H01H 85/25, H01H 31/12

(54) **SINGLE POLE FUSE HOLDER BASE**
EINPOL-SICHERUNGSHALTERBASIS
BASES DE SUPPORT DE FUSIBLES UNIPOLAIRE

(43) Date of publication of application: 06.07.2005
(73) Proprietor: Pronutec, S.A., 48330 Lemona (ES)
(72) Inventor: MARTIN IMBERT, Diego, E-48330 Lemona (Vizcaya) (ES)
(74) Representative: Carpintero Lopez, Francisco
(86) International application number: PCT/ES2002/000447
(87) International publication number: WO 2004/030007

(56) References cited:
- EP-A- 1 041 692
- EP-A- 1 172 892
- DE-A- 19 707 606
- DE-U- 29 906 759
- ES-U- 1 009 942
- FR-A- 2 751 465

## Description

### OBJECT OF THE INVENTION

The present invention refers to a single-pole fuse-holder base, with load disconnection, of the kind using NH type fuses.

Specifically, the present invention refers to a single-pole fuse-holder consisting of a body, a housing or base and a cover swivel-mounted on the housing, in which the different accessories will be operated easily and without risk of coming into contact with the conductors or hazardous parts of the base body.

### BACKGROUND OF THE INVENTION

Fuse-holders are usually made up of a base which is connected to the respective conductor bars, a base or housing and fuse-holders covers which are hinge-mounted on the respective base. The covers may occupy an operational or closed position, in which connection is made, or else an out-of-service or open position, which corresponds to the disconnection position of the fuses. A blown fuse may be replaced in the open position, and other parts that might be damaged and need replacement can also be removed/refitted in this position.

Fuse-holder bases of the above-mentioned type are observed, for instance, in Spanish Utility Model n° 1009942 or in international application PCT ES01/00170, both belonging to the holder.

Document EP-A-1041692 discloses a single-pole fuse-holder base according to the preamble of claim 1.

The fuse-holder bases described in these patents are made up of a body, a base housing with a slotted configuration, and a hinged cover, which is jointed onto the side walls of the base housing.

With one of its ends the fuse-holder cover matches up elbow extensions forming pins with their slotted free ends for swivel fitting on respective lugs provided for the purpose on the sides of the housing or base, said cover incorporating means for fastening the fuse in the middle area of its inner face.

The above-mentioned cover has a special configuration matching up with the slots provided in the elbow pins in order to determine stable open and closed positions, even though the geometry presented by these means that stabilise the limit positions is such that it does not perform the intended function efficiently.

Furthermore, the terminals that are mounted on the base body are not protected on the inside, with the consequent risks for operators and/or handlers.

The fact should also be mentioned that when the piece that forms the housing or base is thermostable polyester and made in a mould, the installation of sliding elements is required which are the ones that will determine the lateral geometry of the actual housing or piece, acting with movements perpendicular to that of the core of the mould, with the result that said sliding elements, which have to be added, make the manufacturing process more expensive and, in short, increase the end cost or price of the mould, which all takes place precisely in the areas where the cover pivoting means are provided.

### DESCRIPTION OF THE INVENTION

The single-pole fuse-holder base advocated here is designed to overcome the foregoing problems, so that, while being based on the above-described type of fuse holder, it offers a series of special features that give rise to improved optimum operating and safety capabilities in the fuse holder as a whole.

One of the improvements that is the object of the invention is the single-pole fuse-holder base of claim 1.

Another feature of the invention refers to the means of jointing between the fuse-holder cover and the housing or base. These means are based on the fact that at the ends of the axial extensions branching out from one of the end parts of the actual cover two large notches, i.e. of considerable depth, are executed, in which are positioned respective lugs provided for the purpose in the sides of the housing or base, with the special feature that, matching up with the inside of those lateral extensions in which the cover notches are made, reinforcements are provided in the form of bosses with a configuration such that, in combination with matching support steps provided on the sides of the housing, they enable the cover to be stabilised and locked transversely, both in the open and in the closed position.

In addition, one of the side steps of the housing presents a lateral protuberance, against which it rests, in order that, in its open position, the cover side extensions are retained against the above-mentioned step and its protuberance, thereby forming a dual stop for the cover, which permits the corresponding handling in its open position with the utmost convenience and safety.

Another novel feature exhibited by the single-pole base assembly of the invention is the possibility of the base assembly being mounted on DIN rails, for which purpose the rear face of the base has flanges on the outside, which engage with the top of one of the rails, and catches that are disposed under the lower side of the other rail. The catches can turn so as to lock against the rail, with the special feature that the catches are operated from inside the housing, at the front end of the base, using a suitable tool for the purpose that acts on a slotted head, which enables the catches to be turned. As the catches are operated from inside the housing, there is no possibility of coming into contact with live pieces or parts.

Another novel feature is that access to the wall fastening screws is available without any risk of coming into contact with live parts, as due provision is made, matching up with the position of the fixing screws, that the base body should present cylindrical necks by way of which the respective screwdriver is inserted in a guided and insulated fashion.

### DESCRIPTION OF THE DRAWINGS

To supplement the description that is being given and to facilitate a clearer understanding of the invention, in accordance with a preferred practical embodiment, a set of drawings is attached as an integral part of said description, wherein for purely informative but not restrictive purposes the following is represented:
Figure 1.- It shows a perspective view of the single-pole base that is the object of the invention without the cover.
Figure 2.- It shows another likewise perspective view of the same base represented in the previous figure with the protection covers for the conductor anchorages in the open position, as well as an exploded view of the tools that are used precisely for fastening the anchorage of the conductors.

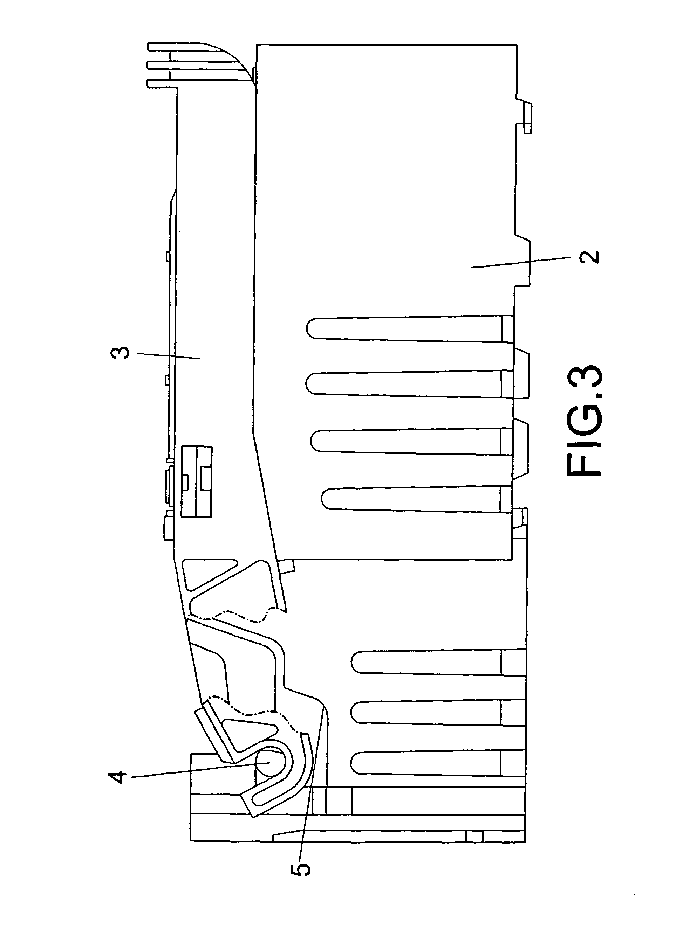

Figure 3.- It shows a side view of the single-pole base assembly with the respective cover in the closed position.

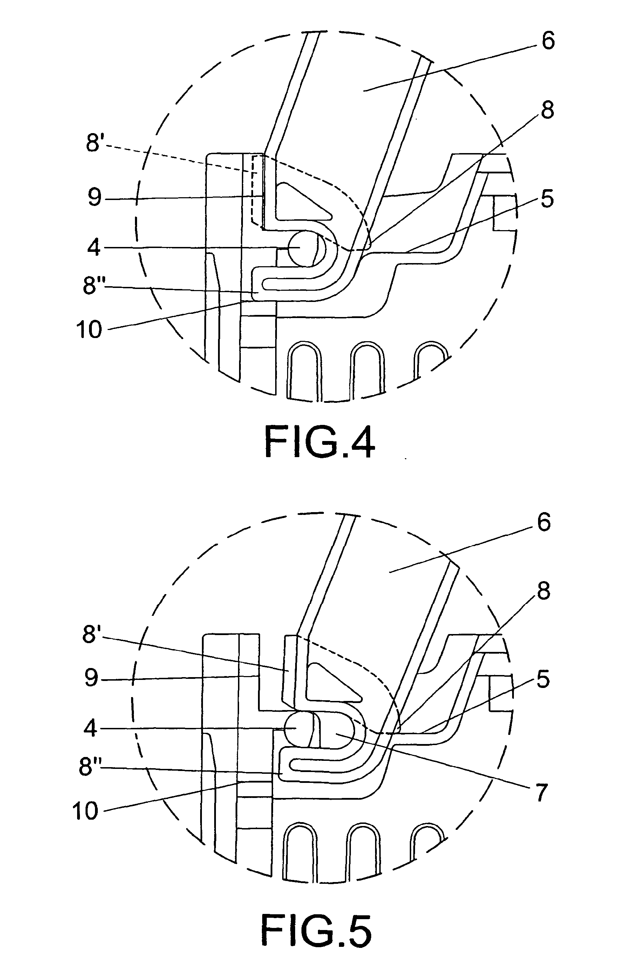

Figure 4.- It shows a close side view of the hinging of the cover to the housing or base of the fuse holder.
Figure 5.- Like the previous figure, it shows another close view with a slight movement of the actual cover to reveal the supports that establish the stable open position of said cover.

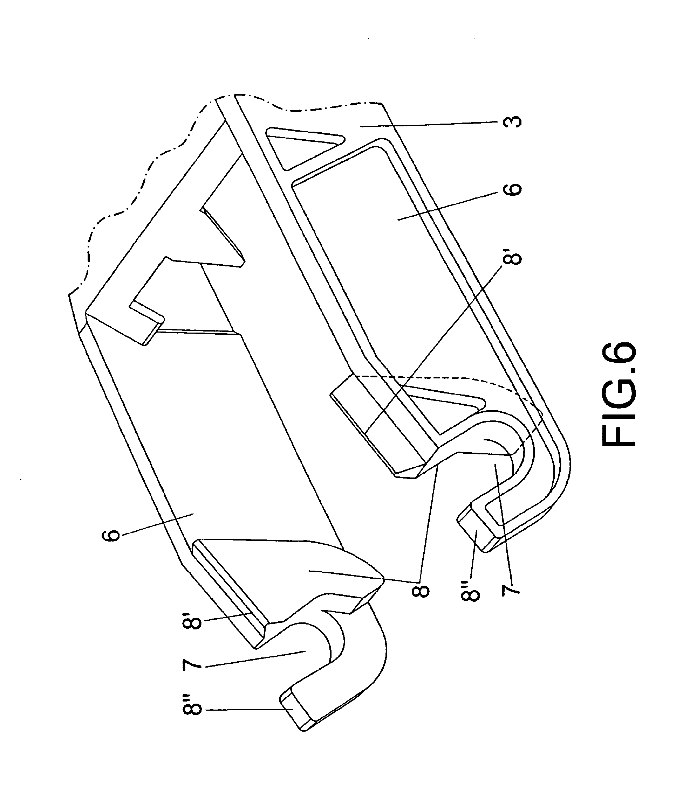

Figure 6.- It shows a close view of the end part of the cover on which the jointing functions are established, showing the reinforcements or shoulders on the inside that establish the supports and stops to determine the stable positions of said cover.
Figure 7.- It shows a lower perspective view of the single-pole base assembly anchored to a pair of guides.

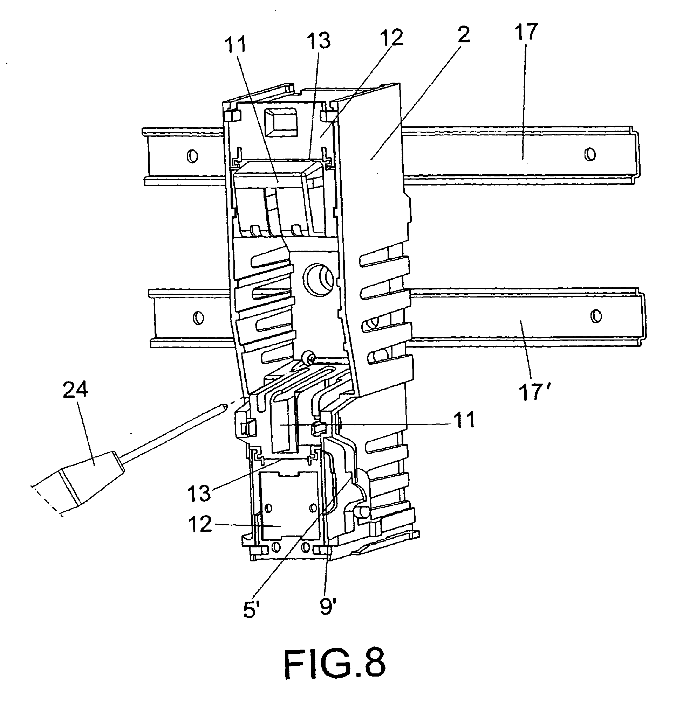

Figure 8.- It shows a front perspective of the same assembly represented in the previous figure, without the cover.
Figure 9.- Finally, it presents a cross-sectional side view of the single-pole base showing how the screws are operated that have to fix said base to a wall.

### PREFERRED EMBODIMENT OF THE INVENTION

In the light of the above-mentioned figures it may be observed how the single-pole fuse-holder base that is the object of the invention comprises a base body (1), a housing or base (2) and a cover (3) hinge-mounted on said base or housing (2).

One of the improvements that is the object of the invention is that, forming part of the actual base body (1), guards (11) are provided for the respective electrical terminals for the fuses, guards (11) to each of which are jointed, by way of a weakening line (13), covers (12) aligned facing the above-mentioned terminal conductors, with the special feature that said covers are provided with means for stabilising them in the open position to permit easy working on the anchorages by means of the respective tools (14), as well as means for securing the covers (12) in the closed position in order to prevent undue or accidental access to live parts.

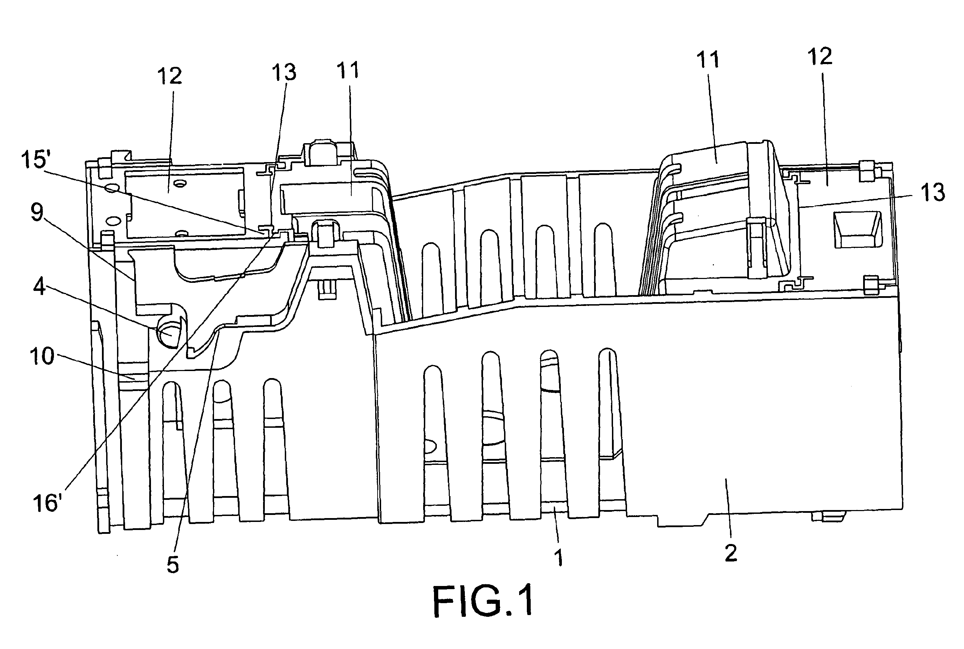

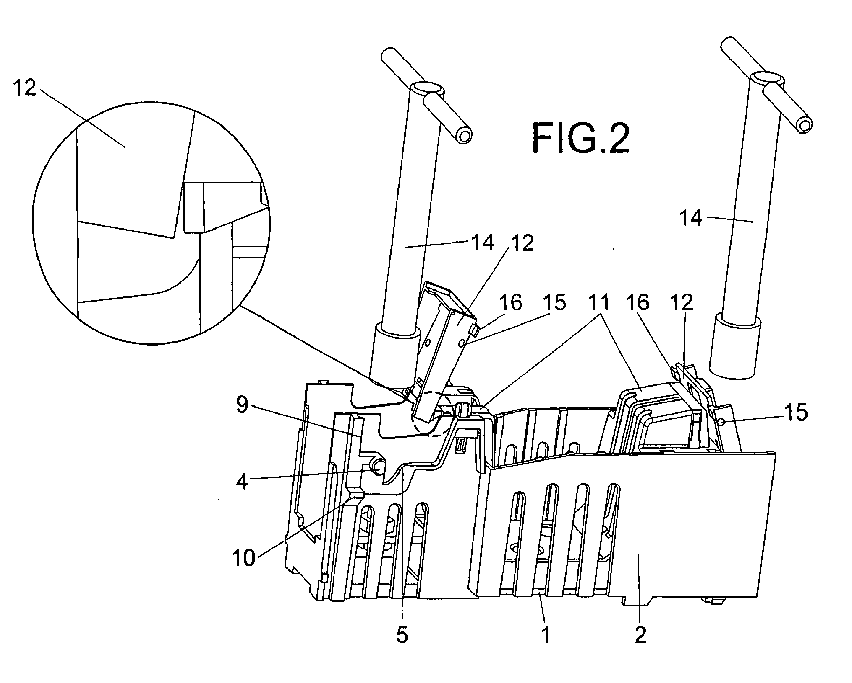

Specifically, the closed position is obtained by means of little side protuberances (15) which are pressed into the side walls of the housing (2) and act in conjunction with close position limit stops (16), while in open position the stable position of the covers is obtained by means of stops that come into contact with one another and which correspond to references (15') and (16'), said stops being provided on the side edges of the covers (12) and on the corresponding parts of the guards (11), on either side of the folding hinge (13), as may be all observed in figures 1 and 2.

According to another of the improvements that is an object of the invention, at one of its end parts the cover (3) presents parallel lateral extensions (6) that are provided with deep notches (7) accommodating lugs or shoulders (4) on the sides of the base or housing (1), so that the cover may be folded by turning it in relation to the aforesaid lugs from a closed position to an open position and vice versa. On their inner side the extensions (6) of the cover (3) have shoulders or reinforcements (8), the outer edge of which (8') engages, when the cover is in the closed position, with matching grooves (5') defined in support steps (5) provided in the sides of the housing (2), while in the maximum opening position the endmost edges (8') are housed in grooves (9') established in support steps (9) in the housing, in order to stabilise and lock the transverse movement of the cover, in both positions.

The fuse-holder advocated here also has means for stabilising the cover in its open position, on the basis of which the side extensions (6) of the cover (3) are supported on steps (9) in the housing (2) by way of the endmost edge (8'), which is housed in the corresponding groove (9') and locked by contact between the side extensions (8'') and side protuberances (10) from the actual steps (9) which prevent any subsequent turning of the cover, thereby achieving a dual stop that assures a firm and secure position in the opening of the cover (3).

The single-pole base assembly described can be anchored to a pair of DIN guides (17) (17'), by means of flanges (18) and catches (20) established for the purpose on the outer side (19) of the base (1), the flanges (18) being engaged at the top of the upper guide (17), whilst the catches or latches (20) are anchored at the under side of the lower guide (17').

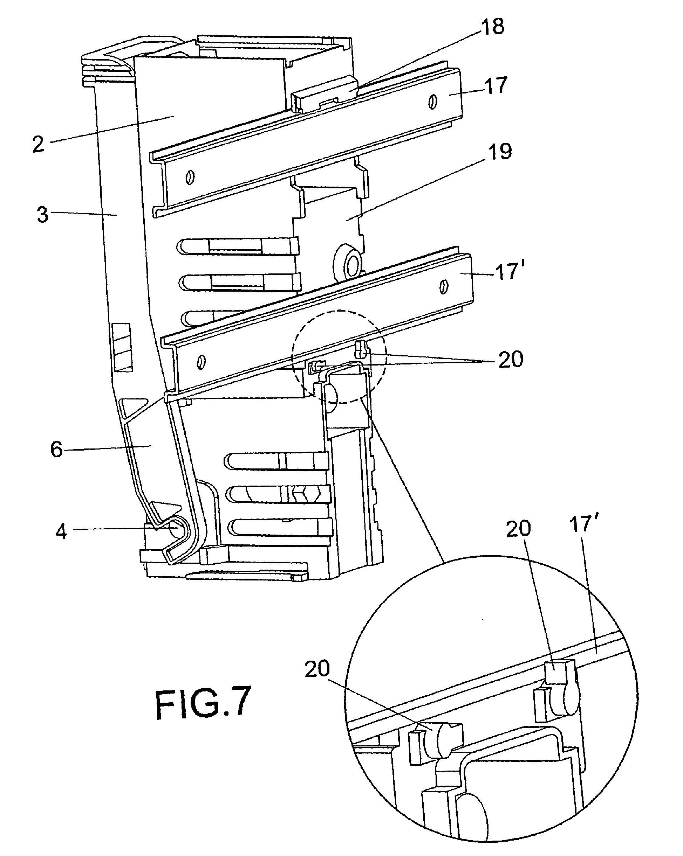

The catches (20) can be turned with a tool (24), such as a screwdriver for instance, operating from inside the housing (2) on the front end of the base body (1), thereby preventing access to live parts. For this purpose the inner end of the aforesaid catches (20) is designed to be duly knurled or configured to receive the action of the tool (24), there also being markings on the bottom of the housing relating to the release or locking positions of said catches (20), as may be observed in figure 7.

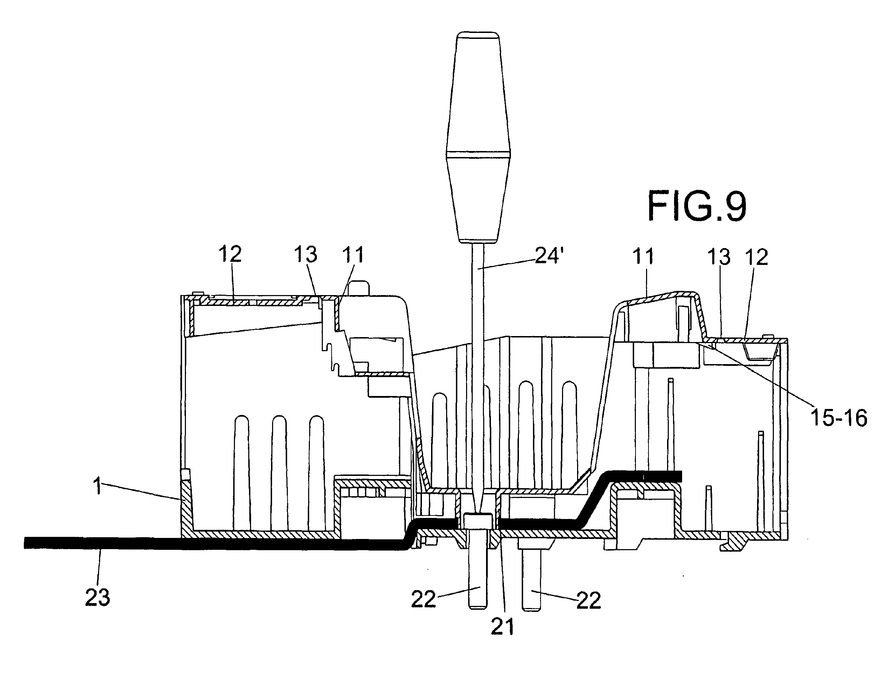

Figure 9 shows a cross section of the base assembly in which the base body (1) presents holes with necks (21) for the insertion of the assembly wall mounting screws (22) and said necks (21) are designed to permit access to the retaining screws (22) without risk of contact with live parts.

## Claims

1. Single-pole fuse-holder base, made up of a base body (1), a housing or base (2) and a cover (3) hinged on it, including the corresponding terminals and anchorages for the conductors, wherein the base body (1) includes guards (11) that cover the fuse reception terminals, **characterised in that** each guard is terminated at one of its ends, by way of hinging and weakening lines (13), with corresponding covers (12) that are aligned with the anchorages of the terminals, each of these covers (12) being provided with shoulders (15) and stops (16) that limit and assure the closed position of the covers (12) on the housing (2), while in the hinging areas (13) they have lips (15'), matching others (16') in the fixed area of the guard (11), which stabilise the covers (12) in the open position.

2. Single-pole fuse-holder base, according to claim 1, **characterised in that** at the end where it is jointed to the housing (2) the cover(3) has a pair of lateral extensions (6) provided at its ends with deep notches (7) in which respective lugs or shoulders (4) in the sides of the housing or base (2) are accommodated, with the special feature that the inner face of these side extensions (6) on the cover (2) are provided with inner shoulders (8) whose endmost edge (8')engages in the closed position in grooves (5') defined in support steps (5) provided on the sides of the housing (2), while in the maximum opening position the endmost edges (8') are accommodated in grooves (9') established in support steps (9) in the housing (2), in order to stabilise the cover (3) transversely.

3. Single-pole fuse-holder base, according to claim 2, **characterised in that** the lateral extensions (6) to the cover rest, in its open position, on the housing (2) support steps (9), by way of the endmost edge (8'), which is engaged in the corresponding groove (9') and locked in the turn by contact between the edge (8") of the lateral extensions (6) against lateral protuberances (10) of the actual steps (9), thereby providing a dual stop for the cover (3) in this position.

4. Single-pole fuse-holder base, according to claim 1, **characterised in that** flanges (18) and catches (20) are established at the outer end (19) of the base (1) to permit the fastening of the base to DIN guides (17) (17'), the flanges (18) being coupled at the top of the upper guide (17), while the catches (20) can be locked onto the bottom edge of the lower guide (17'), due provision being made for the catches (20) to be able to turn by means of the action of a suitable tool (24), an operation that is performed from the inside of the housing on the front end of the base (1), thereby preventing access to live parts.

5. Single-pole fuse-holder base, according to claim 1, **characterised in that** access to wall mounting screws (22) is provided without risk of contact with live parts, it being duly designed so that, matching up with the position of the mounting screws (22), the base body (1) should present cylindrical necks (21), by way of which the respective screwdriver (24') is inserted in a guided and insulated fashion.

## Patentansprüche

1. Einpol-Sicherungshalterbasis, mit einem Basiskörper (1), einem Gehäuse oder einer Basis (2) und einer schwenkbar mit diesem bzw. dieser verbundenen Abdeckung (3), einschließlich der entsprechenden Anschlüsse und Verankerungen für die Leiter, wobei der Basiskörper (1) Schutzteile (11) aufweist, welche die Sicherungsaufnahmeanschlüsse bedecken,
**dadurch gekennzeichnet, dass** jedes Schutzteil an einem seiner Endbereiche über Schwenk- und Schwächungslinien (13) an entsprechenden Abdeckungen (12) endet, die mit den Verankerungen der Anschlüsse ausgerichtet sind, wobei jede dieser Abdeckungen (12) mit Schultern (15) und Anschlagteilen (16) versehen ist, welche die Schließposition der Abdeckungen an dem Gehäuse (2) begrenzen und diese gewährleisten, während die Abdeckungen in den Schwenkbereichen (13) Lippen (15') aufweisen, welche an weitere Lippen (16') in dem festen Bereich des Schutzteils (11) angepasst sind und die Abdeckungen (12) in der offenen Position stabilisieren.

2. Einpol-Sicherungshalterbasis nach Anspruch 1, **dadurch gekennzeichnet, dass** die Abdeckung (3) an dem Ende, an dem sie mit dem Gehäuse (2) verbunden ist, ein Paar seitlicher Verlängerungen (6) aufweist, die an ihren Enden mit tiefen Ausnehmungen (7) versehen sind, in denen betreffende Ansätze oder Schultern (4) der Seiten des Gehäuses oder der Basis (2) aufgenommen sind, mit dem speziellen Merkmal, dass die Innenflächen dieser an der Abdeckung (3) ausgebildeten seitlichen Verlängerungen (6) mit Innenschultern (8) versehen sind, deren am äußersten Ende gelegener Rand (8') in der Schließposition in Nuten (5') eingreift, welche in an den Seiten des Gehäuses (2) vorgesehenen Haltestufen (5) ausgebildet sind, wobei in der maximalen Öffnungsposition die am äußersten Ende gelegenen Ränder (8') in Nuten (9') aufgenommen sind, die in Haltestufen (9) des Gehäuses (2) ausgebildet sind, um die Abdeckung (3) in Querrichtung zu stabilisieren.

3. Einpol-Sicherungshalterbasis nach Anspruch 2, **dadurch gekennzeichnet, dass** die seitlichen Verlängerungen (6) der Abdeckung in deren Öffnungsposition auf den Haltestufen (9) des Gehäuses (2) ruhen, und zwar mittels des am äußersten Ende gelegenen Rands (8'), der in die entsprechende Nut (9') eingreift und bei Drehung durch Kontakt zwischen dem Rand (8") der seitlichen Verlängerungen (6) und seitlichen Vorsprüngen (10) der eigentlichen Stufen (9) verriegelt wird, wodurch in dieser Position ein zweifacher Anschlag für die Abdeckung (3) gebildet ist.

4. Einpol-Sicherungshalterbasis nach Anspruch 1, **dadurch gekennzeichnet, dass** an dem äußeren Ende (19) der Basis (1) Flansche (18) und Arretierteile (20) ausgebildet sind, um das Befestigen der Basis an DIN-Führungen (17) zu ermöglichen, wobei die Flansche (18) an den oberen Bereich der oberen Führung (17) angekoppelt sind, während die Arretierteile (20) an dem unteren Rand der unteren Führung (17') mittels einer dahingehenden Vorkehrung verriegelt werden können, dass die Arretierteile (20) durch Betätigung eines geeigneten Werkzeugs (24) gedreht werden können, wobei diese Operation vom Inneren des Gehäuses her an dem vorderen Ende der Basis (1) durchgeführt wird, wodurch ein Zugang zu stromführenden Teilen verhindert wird.

5. Einpol-Sicherungshalterbasis nach Anspruch 1, **dadurch gekennzeichnet, dass** der Zugriff auf Wandbefestigungsschrauben (22) ohne Risiko von Kontakt mit stromführenden Teilen möglich ist, wobei dementsprechend vorgesehen ist, dass der Basiskörper (1) entsprechend den Positionen der Befestigungsschrauben (22) mit zylindrischen Hälsen (21) versehen ist, mittels derer der entsprechende Schraubenzieher (24') in geführter und isolierter Weise eingeführt wird.

## Revendications

1. Base de support de fusible unipolaire, réalisée par un corps de base (1), un boîtier ou base (2) et un couvercle (3) articulé à celui-ci, incluant les bornes et ancrages correspondants pour les conducteurs, où le corps de base (1) comporte des gardes (11) qui couvrent les bornes de réception de fusible, **caractérisée en ce que** chaque garde est terminée à une de ses extrémités, par des lignes d'articulation et d'affaiblissement (13), par des couvercles correspondants (12) qui sont alignés avec les ancrages des bornes, chacun de ces couvercles (12) étant muni d'épaulements (15) et de butées d'arrêt (16) qui limitent et assurent la position fermée des couvercles (12) sur le boîtier (2), tandis que dans les zones d'articulation (13), ils ont des lèvres (15'), s'adaptant à d'autres (16') dans la zone fixe de la garde (11), qui stabilisent les couvercles (12) dans la position ouverte.

2. Base de support de fusible unipolaire selon la revendication 1, **caractérisée en ce qu'**à l'extrémité, où il est relié au boîtier (2), le couvercle (3) présente deux extensions latérales (6) présentant à ses extrémités des encoches profondes (7) dans lesquelles des pattes ou épaulements respectifs (4) dans les côtés du boîtier ou base (2) sont logés, avec la caractéristique spéciale que la face intérieure de ces extensions latérales (6) sur le couvercle (2) sont munies d'épaulements intérieurs (8) dont le bord le plus extrême (8') s'engage en position fermée dans les rainures (5') définies dans les gradins de support (5) réalisés sur les côtés du boîtier (2), tandis que dans la position d'ouverture maximale, les bords les plus extrêmes (8') sont reçus dans des rainures (9') établies dans les gradins de support (9) dans le boîtier (2) pour stabiliser le couvercle (3) transversalement.

3. Base de support de fusible unipolaire selon la revendication 2, **caractérisée en ce que** les extensions latérales (6) au couvercle restent dans leur position ouverte, sur les gradins de support (9) du boîtier (2), par le bord le plus extrême (8'), qui est engagé dans la rainure correspondante (9') et est verrouillé lors du tour par le contact entre le bord (8") des extensions latérales (6) contre des protubérances latérales (10) des gradins actuels (9) en réalisant ainsi une butée d'arrêt double pour le couvercle (3) dans cette position.

4. Base de support de fusible unipolaire selon la revendication 1, **caractérisée en ce que** les brides (18) et encliquetages (20) sont établis à l'extrémité extérieure (19) de la base (1) pour permettre la fixation de la base à des guides DIN (17, 17'), les brides (18) étant couplées au-dessus du guide supérieur (17), tandis que les encliquetages (20) peuvent être verrouillés sur le bord de fond du guide inférieur (17'), une réalisation appropriée étant réalisée pour les encliquetages (20) pour qu'ils soient aptes à tourner au moyen de l'action d'un outil approprié (24), une opération qui est exécutée depuis l'intérieur du boîtier sur l'extrémité frontale de la base (1), en empêchant ainsi l'accès à des parties vives.

5. Base de support de fusible unipolaire selon la revendication 1, **caractérisée en ce que** l'accès à des vis de montage de paroi (22) est réalisé sans risque de contact avec les parties vives, celui-ci étant conçu de façon, en correspondance avec la position des vis de montage (22), que le corps de base (1) devrait présenter des cols cylindriques (21) par lesquels le tournevis respectif (24') est inséré d'une manière guidée et isolée.
